Europäisches Patentamt

European Patent Office

Office européen des brevets

(11) Numéro de publication: **0 221 594**
**B1**

(12) **FASCICULE DE BREVET EUROPEEN**

(45) Date de publication du fascicule du brevet:
05.09.90

(21) Numéro de dépôt: 86201742.3

(22) Date de dépôt: 08.10.86

(51) Int. Cl.⁵: **H02K 29/10, H02P 6/02**

(54) Moteur à alimentation à courant continu.

(30) Priorité: **15.10.85  CH 4440/85**

(43) Date de publication de la demande:
**13.05.87 Bulletin 87/20**

(45) Mention de la délivrance du brevet:
**05.09.90 Bulletin 90/36**

(84) Etats contractants désignés:
**CH DE ES FR GB IT LI**

(56) Documents cités:
**EP-A- 0 123 347**
**DE-A- 2 020 793**
**DE-A- 2 639 055**
**DE-A- 3 345 272**
**GB-A- 1 048 471**
**US-A- 3 706 923**

(73) Titulaire: **Mavilor Systèmes S.A., Grenette 162, Place de Notre Dame, CH-1700 Fribourg(CH)**

(72) Inventeur: **Tassinario, Giampiero, Via A. Da Settimello, 129, I-50040 - Settimello/Firenze(IT)**

(74) Mandataire: **Jörchel, Dietrich R.A. et al, c/o BUGNION S.A. Conseils en Propriété Industrielle 10, route de Florissant Case postale 375, CH-1211 Genève 12 Champel(CH)**

**Description**

Moteur à alimentation à courant continu sans collecteur à commutation électronique, à excitation à aimants permanents, pourvu d'un rotor portant p paires d'aimants permanents et d'un stator muni d'au moins un bobinage, l'alimentation des bobines du bobinage étant commandable par un codeur synchronisé au rotor par des moyens mécaniques ou autres, à travers un circuit de commutation électronique comprenant un nombre de capteurs disposés le long de la périphérie du codeur détectant la position angulaire du rotor, le nombre de ces capteurs est impair et égal à 2N + 1, N étant un entier positif, le nombre des bornes de connexion du bobinage auxquelles est appliquée de manière sélective la tension d'alimentation est égale à 2N + 1 ou un multiple de celui-ci, le nombre de commutations par tour complet du rotor est égal à 2p(2N + 1) et lors de chaque commutation la connexion entre l'une des bornes de la source de tension et l'une au moins des bornes de connexion du bobinage est maintenue.

Un moteur fonctionnant sans balais et sans collecteur et dont l'excitation du bobinage fixe est commandé par un organe solidaire en relation avec l'arbre moteur est décrit dans la demande de brevet européen EP-A-0123347 de la déposante. Selon un exemple d'exécution et lorsque le bobinage est imbriqué. La commutation est commandée par huit commutateurs assurant l'excitation du bobinage d'induit en fonction de la position du rotor. Lors de chaque commutation quatre commutateurs sont actionnés, les deux qui connectaient le bobinage à la source de tension passent à l'état 0 et deux autres qui étaient à l'état 0 connectent le bobinage respectivement aux bornes + et - de la source de tension.

Lors de chaque commutation deux commutateurs par lesquels passe le courant d'alimentation doivent être actionnés pour couper ce courant qui par la suite passera par deux autres commutateurs. Une partie du bobinage qui jusqu'ici était traversée par un courant positif doit être traversée par un courant négatif et une partie du bobinage traversée par un courant négatif devra être traversée par un courant positif. Aussi bien l'interruption du courant d'alimentation à deux endroits du circuit et l'obligation de modifier la direction de courant dans deux parties du bobinage créent lors de chaque commutation des chocs aussi bien mécaniques (parties mobiles du moteur) qu'électriques.

Dans le DE-A-2 020 793, on décrit un dispositif de commutation de l'alimentation des enroulements statoriques d'un moteur à courant continu, de sorte qu'à chaque commutation on agit sur deux bornes de connexion consécutives de l'induit dont l'une est déjà connectée à la source de tension de sorte à connecter l'autre borne à la source de tension et déconnecter celle qui était déjà connectée.

Dans le DE-A-3 345 272 on propose un autre procédé de commutation permettant sur m ≳ 5 enroulements statoriques d'avoir lors de chaque commutation un enroulement qui n'est pas parcouru par un courant tandis que (m-1)/2 sont parcourus par un courant positif et (m-1)/2 par un courant négatif ayant ainsi toujours un équilibre des impédances de deux voies du courant. Le procédé décrit dans le DE-A-3 345 272 permet une commutation douce et évite les chocs aussi bien mécaniques qu'électriques. Néanmoins, dans des conditions de charge élevée et notamment de vitesse élevée ce mode de commutation n'est pas favorable parce que le dispositif de commutation n'arrive pas à suivre.

Un autre moteur à alimentation à courant continu est décrit dans US-A 3 706 923. Dans ce moteur, le champs tournant varie automatiquement suivant la charge ou la vitesse, les variations de charge et de vitesse étant détéctées par des changements de courant dans les enroulements statoriques.

La présente invention a pour but de permettre de créer un moteur du type mentionné mais mieux adapté aux divers régimes de travail en tirant profit de ces deux principes de commutation.

Le moteur selon l'invention est caractérisé par le fait que le circuit de commutation est agencé pour opérer en deux modes de commutation, le choix du mode se faisant par une unité de commande suivant les besoins de la charge, les deux modes sont :
- soit lors de chaque opération de commutation deux commutateurs reliés à deux capteurs agissant sur deux bornes de connexion consécutives sont actionnés simultanément, l'un déconnectant la borne de connexion branchée à l'autre borne de la source de tension tandis que le second commutateur connecte la borne de connexion consécutive à ladite autre borne de la source de tension,
- soit dans chaque état de commutation trois commutateurs connectent trois des bornes de connexion à la source de tension, deux bornes de connexion consécutives étant connectées à la même borne de la source de tension, et que lors de chaque commutation deux commutateurs agissant sur deux bornes non consécutives sont actionnés, de sorte que alternativement chacune des bornes de la source de tension est connectée à deux bornes de connexion consécutives.

Le fait d'avoir un nombre impair de capteurs et de bornes de connexion permet lors de chaque commutation, de faire en sorte que l'une aux moins des bornes de commutation connectées aux bornes de la source de tension ne soit pas déconnectée de la source de tension.

En fonction de l'état de la charge du moteur on peut passer d'un type de commutation à l'autre. Ce passage se fait préférablement automatiquement.

Le premier mode de commutation, décrit dans la revendication 1, a la particularité que lors d'une commutation, d'une part, il n'y a qu'un seul commutateur qui interrompt un courant dans le circuit et, d'autre part, il n'y a qu'une seule partie du bobinage qui est soumise à un changement du sens du courant qui la traverse.

Le deuxième mode de commutation, décrit dans la revendication 1, a la particularité que la commutation est encore plus douce car il n'y a pas de déséquilibre entre les impédances de deux branches du bobinage en parallèle, et on n'oblige pas le courant à changer de direction dans une partie du bobinage, mais dans un premier temps on annule le courant dans cette partie en branchant les deux bornes de connexion consécutives à la même borne de la source de tension et, lors de la commutation suivante on fait passer un courant dans la direction opposée à celle qui avait le courant dans cette branche avant d'être annulé.

Le deuxième mode permet une commutation très douce en principe à basse vitesse et grande charge ou à grande vitesse et faible charge et est préféré au premier mode de commutation. On peut aussi réaliser pour un moteur un démarrage doux, en utilisant le deuxième type de commutation qui permet d'obtenir que les impédances de deux voies du courant soient équilibrées.

D'une manière générale, le choix du mode de commutation peut être aussi commandé manuellement par un commutateur extérieur et on peut également choisir indépendamment de la charge du moteur l'un ou l'autre mode qui pourrait convenir le mieux à une utilisation précise.

Donc, pour le même bobinage d'un moteur, on peut soit automatiquement, soit à volonté passer d'un mode de commutation à l'autre en fonction de la vitesse et/ou du courant ou d'autres critères.

Dans certains cas le bobinage doit être connecté en triangle ou en étoile c'est-à-dire que seulement trois bornes de connexion sont effectivement connectées au bobinage. Pour rationaliser la construction au départ on part d'un bobinage comprenant M bornes de connexion M étant un nombre impair et divisible par 3 et on choisit les trois bornes connectées au bobinage en conservant la connexion d'une borne tous les M/3 bornes les autres bornes étant déconnectées. Dans ce cas bien sûr on a trois capteurs et 2p.3 commutations par tour complet du rotor.

L'invention sera décrite plus en détail, à l'aide du dessin annexé en se référant à un moteur à courant continu semblable à celui décrit dans le EP-A-0123347.

La figure 1 est une coupe axiale à travers un moteur selon une première forme d'exécution.

La figure 2 est une vue de dessus du rotor, du même moteur.

La figure 3 est une vue en coupe axiale de l'un des induits du moteur selon la figure 1, à plus grande échelle.

La figure 3A est un détail agrandi de la figure 3.

La figure 3B est une vue en perspective de l'une des bornes de connexion.

La figure 4 est une vue partielle schématique du bobinage.

La figure 5 est une vue schématique de l'une des bobines du bobinage.

La figure 6 est une vue, dans le sens axial des bornes de connexion avec une représentation schématique de quatre paires de pôles et une partie du bobinage.

La figure 7 est une représentation schématique de l'arrangement des enroulements du bobinage de stator.

La figure 8 est une représentation de principe du circuit de commutation électronique selon le premier mode de commutation.

La figure 9 est une tableau représentant le cycle d'une suite des commutations pour l'excitation d'un bobinage selon le premier mode de commutation.

La figure 10 est une représentation de principe du circuit de commutation électronique selon le deuxième mode de commutation.

La figure 11 est une tableau représentant le cycle d'une suite des commutations pour l'excitation d'un bobinage selon deuxième mode de commutation.

La figure 12 représente une deuxième forme d'exécution d'un moteur, en coupe axiale.

La figure 13 représente schématiquement une troisième forme d'exécution.

La figure 14 représente schématiquement une quatrième forme d'exécution.

La figure 15 représente une variante d'exécution du bobinage d'induit.

La figure 16 montre le schéma pour un bobinage ondulé connecté en triangle.

La figure 17 est une tableau représentant le cycle d'une suite des commutations pour l'excitation du bobinage de la figure précédente.

La figure 18 présente schématiquement le dispositif permettant de passer d'un mode de commutation à l'autre en fonction de la charge.

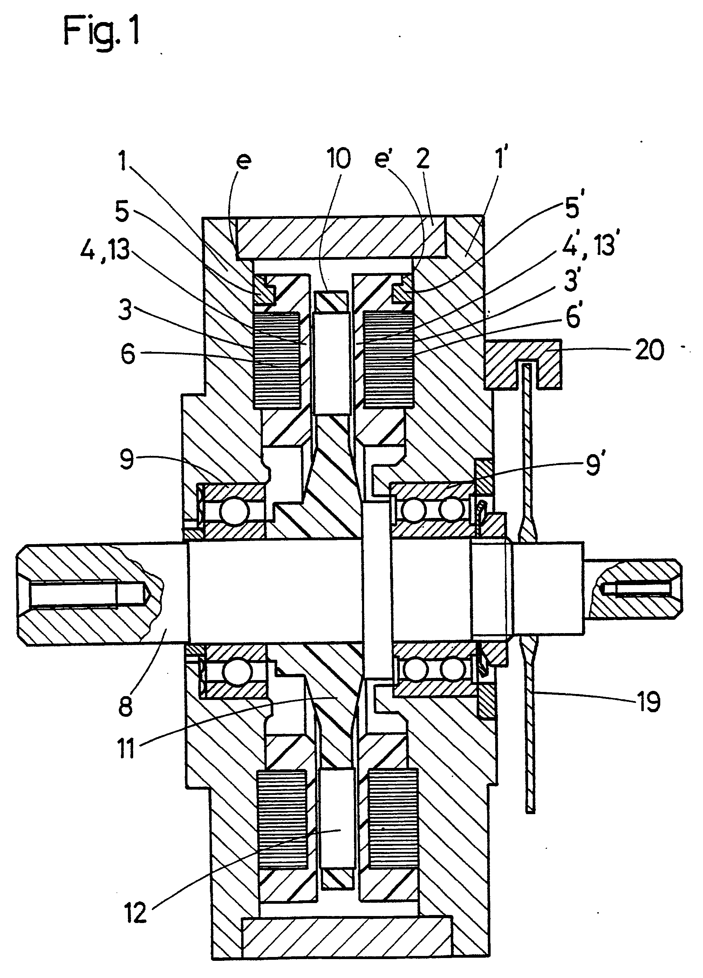

Le moteur représenté à la figure 1 présente deux moitiés de stator disposées symétriquement de chaque côté du rotor 10 en forme de disque, ces demi-stators étant constitués chacun d'un flasque 1, respectivement 1' en aluminium et de l'induit 3, respectivement 3', fixé à la face intérieure du flasque correspondant 1, respectivement 1'. Les deux flasques 1 et 1' sont reliés par un anneau 2 de manière à former un boîtier.

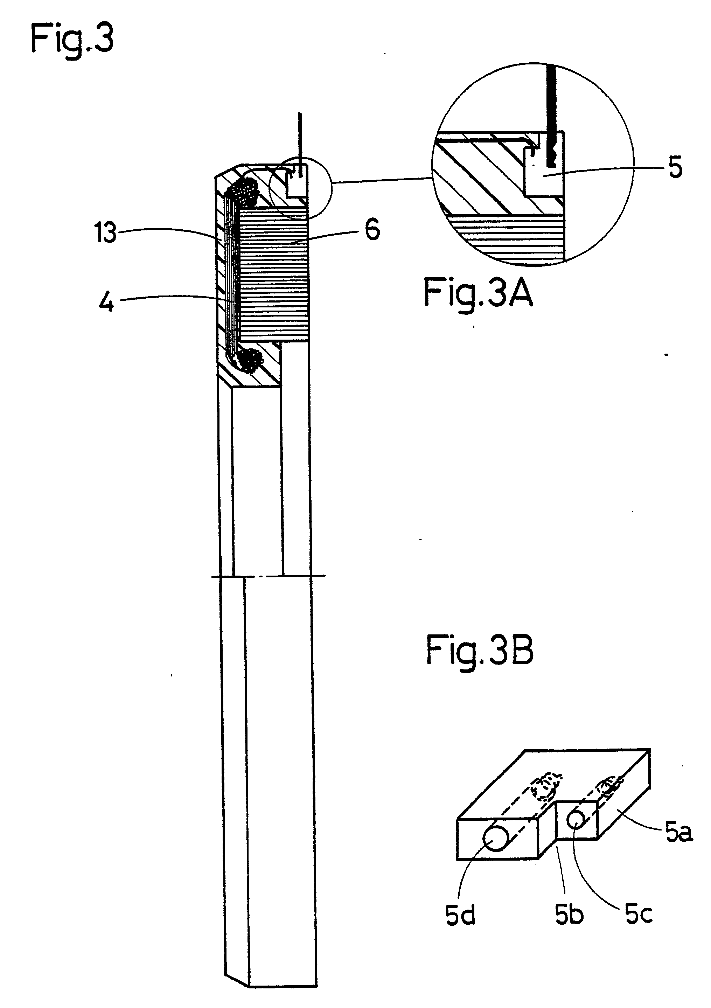

Selon les figures 1 et 3 l'induit 3 est constitué d'un bobinage 4 en forme de panier plat et d'un fer d'induit annulaire 6, tous les deux noyés dans une matière plastique 13, ainsi que incorporé coaxialement dans l'espace extérieur de ces deux éléments, d'un segment d'anneau 5 noyé partiellement dans la même matière plastique 13. L'induit 3 ainsi formé constitue une pièce compacte, dont la fabrication sera décrite plus en détail. Le fer d'induit 6 est formé par l'enroulement d'une tôle magnétique en forme de ruban, formant un paquet de tôles de forme annulaire et le bobinage d'induit 4 est disposé sur son côté en regard du rotor 10. L'autre induit 3', a la même construction composé des éléments 4', 5' et 6' ainsi que la matière plastique 13'.

Le segment d'anneau 5, respectivement 5' qui sera également décrit ultérieurement plus en détail, est divisé en une pluralité de plaquettes isolées les unes des autres constituant les bornes auxquelles sont connectées les bobines constituant le bobinage d'induit 4, respectivement 4'. Des conducteurs électriques e, e' (fig.1) connectent les plaquettes du segment de l'anneau de connexions 5 respectivement 5' vers l'extérieur aux circuits de commutation électronique. Lesdits circuits sont commandés par un codeur rotatif connu en soi comprenant un disque codeur 19 fixé sur l'arbre moteur 8 et un système photo-électrique 20 avec des émetteurs lumineux comme des photodiodes et des récepteurs, le disque codeur ayant des encoches, passe dans l'espace entre les émetteurs et les récepteurs.

Les émetteurs lumineux et les récepteurs associés, ou des capteurs magnétiques doivent être disposés de sorte qu'ils soient successivement actionnés lors du passage de chaque paire de pôles d'aimants permanents. Théoriquement les capteurs doivent être disposés sur un arc géométrique de 360°/2p, c'est-à-dire dans l'espace occupé par un pôle magnétique. Néanmoins dans certains cas cet espace étant très réduit on peut les disposer d'une autre manière et de sorte que les capteurs soient actionnés successivement lors du passage successif de chaque paire de pôles comme décrit dans la demande de brevet européen N° 0 015 9069.

Le segment d'anneau est composé de plaquettes rectangulaires 5a (figures 3A, 3B) présentant une encoche 5b et munies de deux passages 5c et 5d parallèles à la hauteur de la plaquette. Le passage 5c débouchant dans l'encoche 5b, est destiné à recevoir un fil relié au bobinage de l'induit, qui sera décrit plus loin et le passage 5d au fil e ou e' allant vers le circuit de commutation.

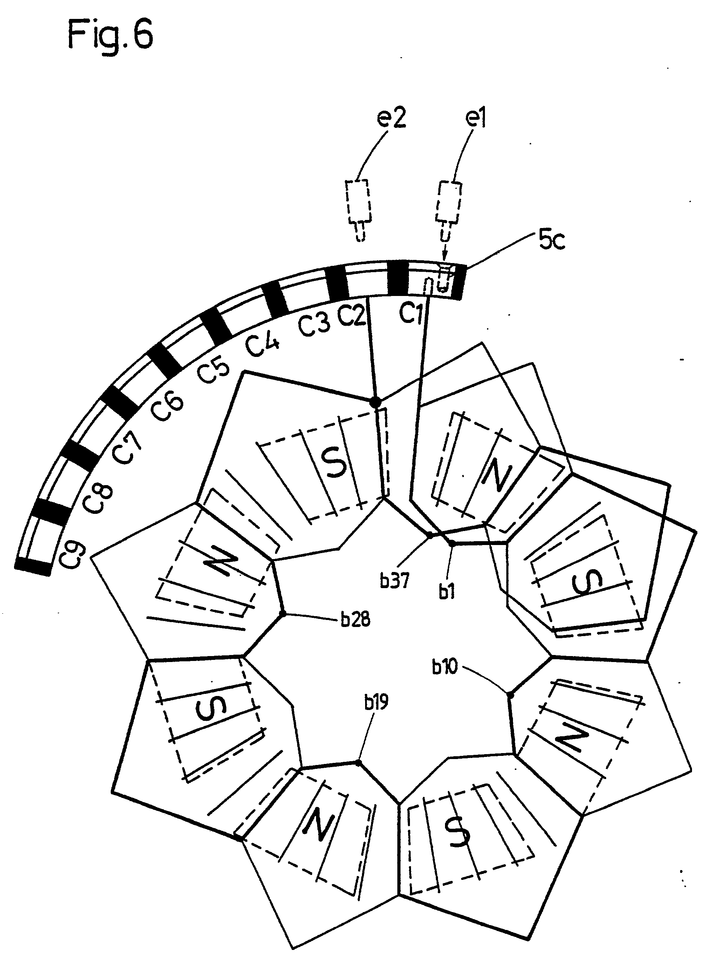

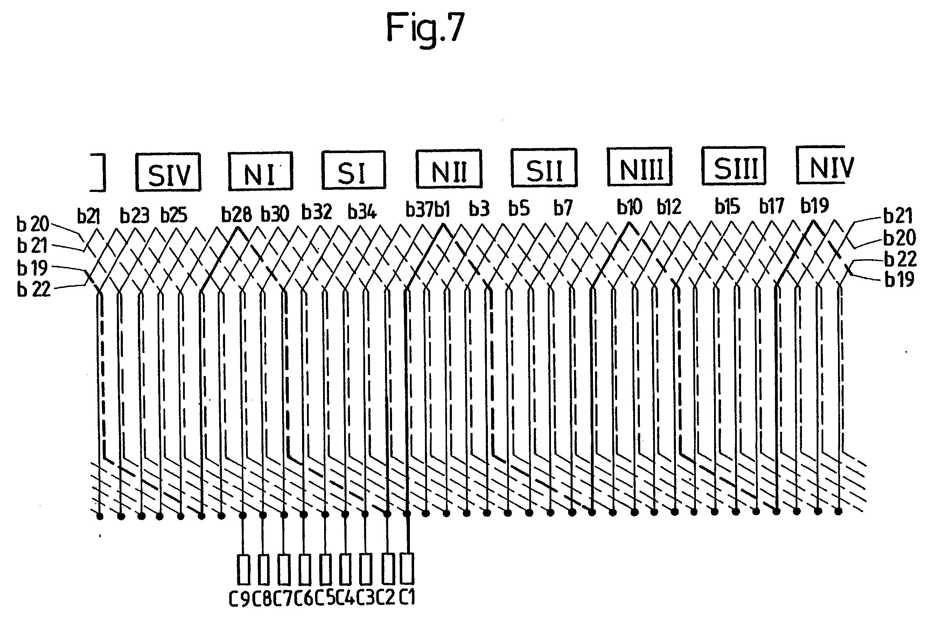

La construction et le branchement des bobines constituant le bobinage d'induit 4, respectivement 4' seront décrits plus loin en détail en relation avec les figures 6 et 7.

Le rotor 10 en forme de disque plat est, par exemple, pressé sur l'arbre 8 du moteur. Il est constitué d'un corps 11 en résine synthétique qui présente intérieurement une surépaisseur formant un moyeu. Dans le corps 11, dans l'exemple considéré, sont noyés huit aimants permanents 12 présentant la forme de segment d'anneau, qui sont par exemple incorporés dans un support en fibre de carbone présentant des logements prévus, le tout étant noyé dans la résine synthétique qui rend le rotor solidaire du moyeu fixé sur l'arbre 8 du moteur. Ces aimants permanents 12 de préférence constitués de Samarium-Cobalt, ont leur axe magnétique parallèle à l'arbre 8 du moteur et engendrent par conséquent des champs magnétiques parallèles à l'arbre. L'épaisseur des aimants permanents 12, dont les faces polaires sont libres de chaque côté, est légèrement plus grande que l'épaisseur de la zone du corps en matière synthétique 11 qui les entoure. Les aimants permanents 12 sont répartis régulièrement sur la périphérie du rotor 10 et disposés de telle sorte que sur chacune des faces du rotor les faces polaires se succédant selon la circonférence, présentent une polarité alternante, ainsi sur chacune des faces du rotor on trouve quatre paires de pôles régulièrement répartis.

Dans le cas général on peut avoir p paires de pôles. Les aimants permanents 12 se déplacent dans l'entrefer entre les deux côtés des tôles 6 et 6' des deux moitiés de stators en regard du rotor, la largeur de cet entrefer étant déterminée par l'épaisseur des bobinages d'induit plats 4, respectivement 4', noyés dans la résine synthétique 13 et 13' et par le jeu nécessaire entre le stator et le rotor. Les flux magnétiques des aimants permanents qui se succèdent selon la circonférence, se ferment à travers les tôles 6 et 6', de telle sorte que les flasques 1 et 1' n'ont aucune fonction magnétique et peuvent dès lors être avantageusement réalisés en aluminium, favorable en ce qui concerne le poids. Les tôles 6 et 6' sont formées à partir d'un ruban de fer enroulé, ce ruban étant muni d'une couche isolante de manière à supprimer les courants de Foucault. Ce fer présente une perméabilité magnétique élevée. Les tôles 6 et 6' peuvent naturellement être exécutées d'une autre manière connue, par exemple par pression d'une poudre de fer mélangée à un liant, les particules de fer étant orientées de manière que la conductibilité électrique dans la direction radiale soit extrêmement faible ou pratiquement inexistante pour empêcher l'apparition de courants de Foucault.

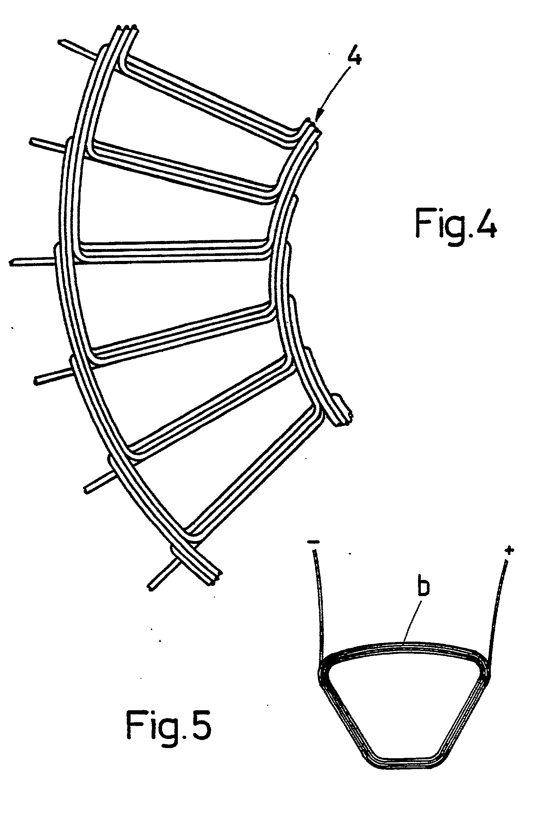

Chacun des bobinages d'induit 4 et 4' est réalisé sous la forme d'un enroulement ondulé tel qu'il est utilisé dans des moteurs à courant continu conventionnels; il est constitué de bobines ou de bobinages partiels qui se recouvrent mutuellement partiellement de manière connue pour former un bobinage d'induit en forme de rosette (fig.5). Il y a p . n + 1 bobines, p étant le nombre de paires de pôles sur un côté du rotor et n le nombre de bornes de commutation du bobinage d'induit. Dans l'exemple considéré p=4 et n=9 de telle sorte que chaque bobinage d'induit est constitué de 37 bobines désignées par b1 et b37 aux figures 6 et 7. Dans ces figures les bobines sont représentées schématiquement par une seule spire comme il est d'usage; dans la pratique chaque bobine présente bien entendu plusieurs spires, l'une de ces bobines b étant représentée à la figure 5. Les deux faces de chaque bobine qui croisent radialement le champ magnétique permanent sont à une distance l'une de l'autre égale à une division polaire, c'est-à-dire égale à la distance des milieux de deux pôles d'aimants permanents voisins selon la circonférence correspondant à un décalage de 45° dans l'exemple considéré, comme représenté à la figure 7, dans laquelle les huit pôles des aimants permanents 12 sur l'un des côtés du rotor sont indiqués schématiquement. Lorsqu'une bobine est ainsi parcourue par un courant, les directions du courant dans les zones des deux pôles voisins sont opposées.

L'exemple considéré, dans lequel le rotor comprend huit aimants permanents et le bobinage d'induit comprend seulement 37 bobines, a été choisi afin de ne pas compliquer la représentation du bobinage et à le rendre plus lisible. Dans la pratique on peut choisir naturellement un nombre de bobines plus élevé, et un nombre de bornes de connexion plus grand.

Dans l'exemple illustré aux figures 6 et 7 on a choisi un bobinage ondulé, série composée de trente-sept bobines. Il y a neuf bobines par paire de pôle plus une bobine permettant de boucler le bobinage. Les bobines occupant la même position relativement à une paire de pôles c'est-à-dire espacées d'une double division polaire sont connectées en série, on a ainsi neuf groupes de bobines en série. L'extrémité libre de la première bobine d'un groupe est connectée à une borne de connexion et l'extrémité libre de la dernière bobine du même groupe est connectée à la borne de connexion suivante, à laquelle est connectée l'extrémité libre de la première bobine du groupe suivant et ainsi de suite. Le groupe partant de la dernière borne de connexion contient une bobine supplémentaire dont l'extrémité libre est connectée à la première borne de connexion.

Ainsi le début de la bobine b1 du premier groupe b1 - b10 - b19 - b28 est connecté à la borne C1 et l'extrémité de la bobine b28 est connectée à la borne C2, de laquelle part le deuxième groupe b37 - b9 - b18 - b27 qui aboutit à la borne C3 et ainsi de suite. Le dernier groupe b30 - b2 - b11 - b20 - b29 partant de la borne C9 comprend une cinquième bobine b29 permettant de connecter la fin de ce circuit à la borne C1. La tension d'alimentation est en principe appliquée entre deux des neuf bornes de connexion C1 à C9; ainsi le bobinage est divisé en deux branches alimentées en parallèle et bobinées dans le sens contraire.

Comme représenté schématiquement à la figure 6, chaque bobine b1 à b37 comprend plusieurs spires, une fois que l'on a bobiné la totalité de la bobine b1 on passe avec le même fil à la bobine b10, qui a la même position par rapport à la deuxième paire de pôles NII - SII que la bobine b1 par rapport aux pôles NI-SI, qui est également complètement bobinée et ensuite on passe à la bobine b19 et ainsi de suite jusqu'à la bobine b28 dont l'extrémité est connectée à la borne C2 de laquelle d'ailleurs part la bobine b28 dont l'extrémité est connectée à la borne C2 de laquelle part la bobine b37 du groupe b37 - b9 - b28 - b27 qui aboutira à la borne C3 et ainsi de suite.

Neuf conducteurs e1 à e9 conduisent vers l'extérieur du moteur et vers le circuit de commutation et notamment les bornes f1 à f9 de neuf commutateurs à trois positions g1 à g9 faisant partie du circuit de commutation électronique G. Les connexions des lignes e1 à e9 aux bornes C1 à C9 peuvent être réalisées au moyen de fiches banane comme celle représentée à la figure 6 en pointillés qui s'enfiche dans le passage 5c de la plaquette 5a.

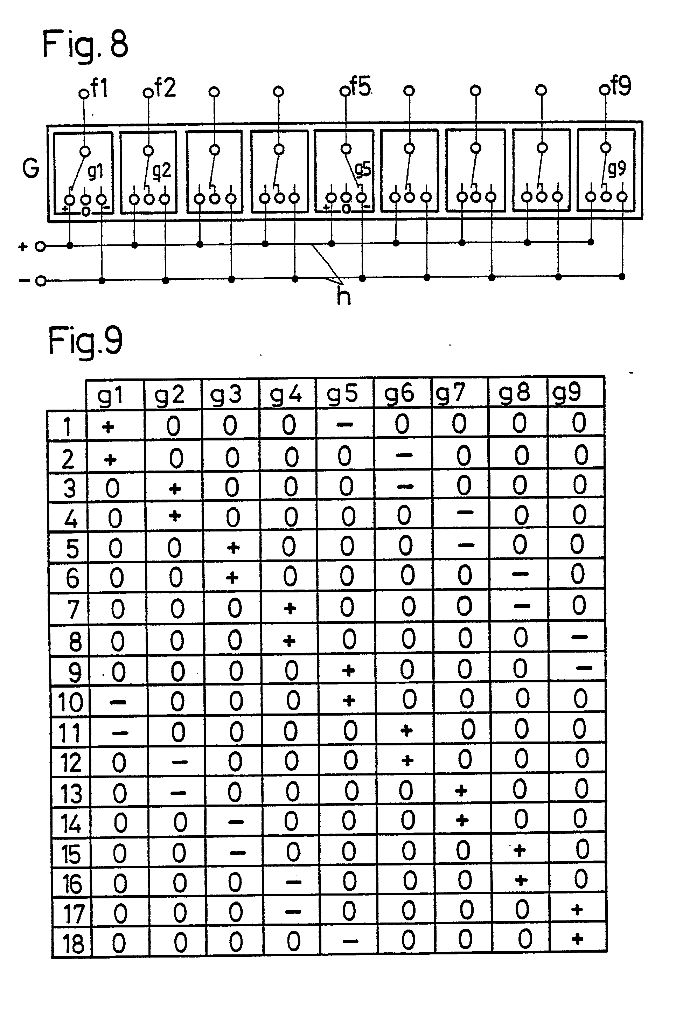

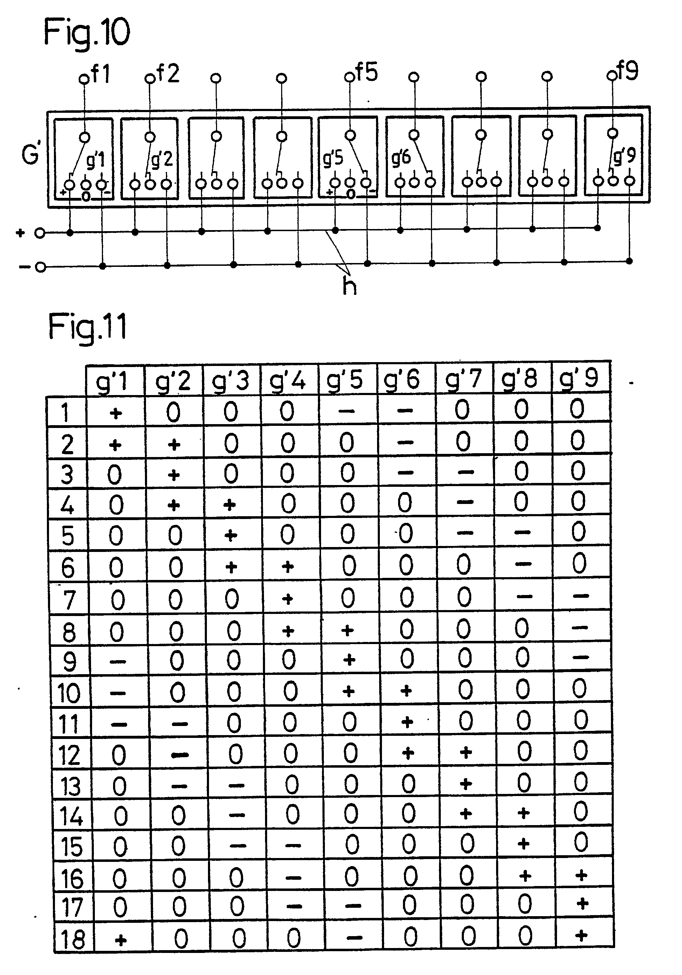

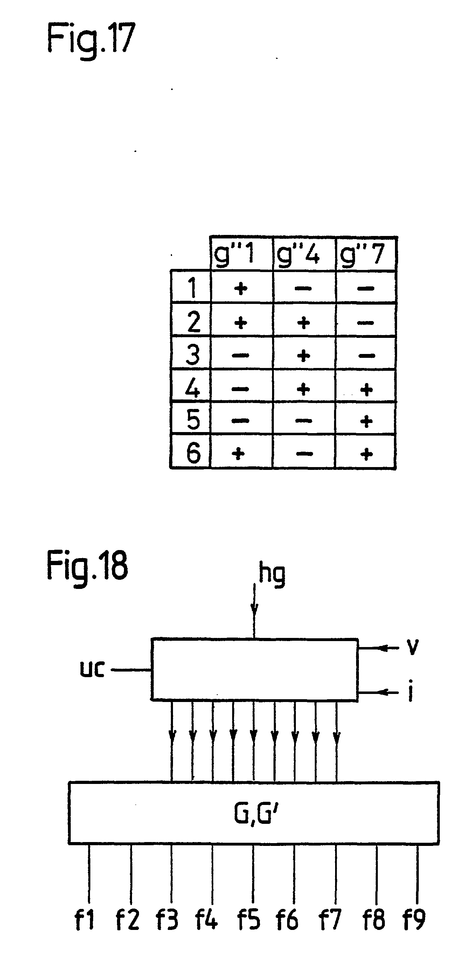

On décrira dans un premier temps, les deux modes de commutations c'est-à-dire, premièrement sans annulation du courant dans une partie de l'induit (figures 8, 9) et deuxièmement avec annulation du courant dans une branche de l'induit (figures 10, 11) et ensuite à la figure 18, on présentera le dispositif permettant de combiner les deux types de commutation.

Un circuit de commutation électronique dont les commutateurs électroniques travaillent avec des transistors ou d'autres semi-conducteurs contrôlés est connu en soi et ne fait pas partie de l'objet de la présente invention. Il n'est mentionné ici que pour les besoins de la description du fonctionnement du moteur, respectivement la description de la série d'excitations des bobines du bobinage d'induit. Le fonctionnement de chacun des commutateurs électroniques g1 à g9 est celui d'un commutateur à trois positions, dont le bras de contact peut occuper trois positions différentes : dans la première position, représentée à la figure 8 pour le commutateur électronique g1, le bras de contact est à la borne + qui est reliée au conducteur positif des conducteurs d'alimentation de la source à courant continu h. Dans la deuxième position le bras de contact, comme représenté à la figure 8 pour les commutateurs électroniques g2, g3, g4, g6, g7, g8 et g9 se trouve sur la borne 0, les alimentations des bornes correspondantes f2 à f4 et f6 à f8 étant alors interrompues. Dans la troisième position le bras de contact, comme représenté à la figure 8 pour le commutateur électronique g5, est à la borne - reliée aux conducteurs négatifs de la source d'alimentation h.

Dans l'exemple des figures 8 et 9 les bornes C1 et C5 sont connectées respectivement à travers les commutateurs à g1 et g5 aux bornes + et - de la source d'alimentation, les autres bornes étant coupées de l'alimentation les bobines sont connectées de la manière suivante : une première branche soumise à une tension positive comprenant en série les bobines des quatre premiers groupes à savoir b1 - b10 - b19 - b18, b37 - b9 - b18 - b27, b36 - b8 - b17 - b26, b35 - b7 - b16 - b25 soit seize bobines et une deuxième branche parallèle dont les bobines sont bobinées dans le sens contraire, comprenant en série les bobines de cinq autres groupes à savoir b34 - b6 - b15 - b24, b33 - b5 - b14 - b23, b32 - b4 - b13 - b22, b31 - b3 - b12 - b21, b30 - b2 - b11 - b20 - b29 - b37 soit vingt-et-une bobines en série parcourues par un courant contraire à celui de la première branche.

Lors de la première commutation et selon le premier mode de commutation on actionne les deux commutateurs consécutifs agissant sur deux bornes consécutives g5 et g6; g5 étant commuté à la position 0 tandis que g6 est commuté à la position -. Ainsi le groupe de bobines b34 - b6 - b15 - b24 est mis en série avec la première branche parcourue par un courant positif, qui comporte ainsi vingt bobines en série tandis que la seconde branche ne comporte que dix-sept bobines. Lors de cette commutation il n'y a que dans le le groupe de quatre bobines en série b34 - b6 - b15 - b24 que le sens du courant a été modifié et on a dû actionner un seul commutateur g5 pour couper momentanément le circuit et non deux comme on procède habituellement. Ainsi la commutation est plus douce. Lors de la commutation suivante on actionne les commutateurs g1 et g2, de sorte que le groupe de bobines b1 - b10 - b19 - b28 est mis en série dans la deuxième branche de circuit qui comporte à nouveau vingt-et-une bobines contre dix-sept de la première branche de bobinage. La tabelle de la figure 9 indique les dix-huit commutations par paire de pôle c'est-à-dire que l'on a 18 x 4 = 72 commutations par cycle ou tour du rotor.

Le circuit de commutation G' de la figure 10 est le même que celui de la figure 8 et comprend également neuf commutateurs g'1 à g'9 mais il est programmé pour qu' il y ait toujours deux commutateurs consécutifs qui sont connectés à la borne + ou - de la source de tension tandis qu'un troisième est connecté à la borne restante de la source.

En considérant la première position de la tabelle, g'1 est à la position + et g'5 et g'6 à la position -, nous avons les quatre premiers groupes de bobines b1 - b10 - b19 - b28, b37 - b9 - b18 - b27, b36 - b8 - b17 - b26 et b35 - b7 - b16 - b25 qui sont connectés en série et forment la première branche, le groupe b34 - b6 - b15 - b24 qui n'est parcouru par aucun courant ses deux extrémités étant au même potentiel et la seconde branche formée des groupes b33 - b5 - b14 - b23, b32 - b4 - b13 - b22, b31 - b3 - b12 - b21 et b30 - b2 - b11 - b20 - b29.

Il est à noter que les impédances des deux branches dans ce cas sont presque équilibrées car la première contient seize bobines et la seconde dix-sept. Lors de la prochaine commutation on actionne les commutateurs g'2 et g'5, de sorte que les deux bornes C1 et C2 du groupe b1 - b10 - b15 - b28 soient au même potentiel tandis que le groupe b34 - b6 - b15 - b24 qui précédemment n'était pas traversé par un courant est mis en série avec les bobines de la première branche, ainsi cette branche comprend toujours seize bobines et la seconde dix-sept.

La commutation avec cette façon de faire est encore plus douce car avant de changer la direction du courant dans un groupe on annule d'abord le courant, ce qui diminue le choc électrique dû à ce changement brusque de la direction du courant. D'autre part les impédances de deux branches en parallèle restent toujours les mêmes. En fait, lors des huit premières positions des commutateurs on a seize bobines dans la première branche parcourue par le courant positif et dix-sept dans la seconde, aux neuvième et dix-huitième positions on a seize bobines dans les deux branches et pour les neuf autres commutations on a dix-sept bobines dans la première branche et seize dans la seconde.

Il s'est avéré que la commutation par le circuit G' décrit précédemment est encore plus douce que celle par le circuit G mais le choix de l'une ou de l'autre commutation est dicté par les besoins de la charge car, comme mentionné précédemment à grande vitesse la commutation ne se fait pas avec précision si l'on utilise le circuit G'.

Le dispositif selon l'invention, (figure 18) comprend une unité de commande UC qui reçoit les signaux hg émis par les capteurs de position et également des signaux qui sont fonction de la vitesse v du moteur et du courant i. Sur la base de ces signaux v, et i le dispositif UC commande un circuit de commutation G, G' soit selon le mode du circuit G, soit selon le mode du circuit G' En réalité, le circuit UC décide et actionne les commutateurs du circuit G, G' de sorte à avoir soit un mode de commutation comme celui du circuit G' (surtout au démarrage) soit comme celui du circuit G, ainsi en fonction de la charge du moteur on a automatiquement la commutation qui convient le mieux.

Tous les commutateurs électroniques g1 à g9 respectivement g1' à g9' du circuit de commutation G, respectivement G ou G, G' sont commandés, de manière connue en soi, par le codeur rotatif synchronisé avec le rotor, en fonction de la position angulaire du rotor, comme mentionné en relation avec la figure 1. Ce codeur photoélectrique comprend dans l'exemple considérée neuf unités émetteur-récepteur arrangées le long d'un arc de cercle et le disque à quatre encoches qui sont régulièrement décalées de 90° l'une par rapport à l'autre de telle manière que pendant chaque rotation de l'arbre moteur le circuit électronique G ou G' ou G, G' est commuté 4 x 18 = 72 fois. Il peut également s'agir d'un codeur inductif ou d'un générateur à effet Hall connu ou tout autre type de codeur.

On décrira maintenant la fabrication d'un induit 3, respectivement 3' avec ses différentes parties. Les bobines d'un bobinage d'induit 4, respectivement 4' sont bobinées en continu au moyen d'une machine à bobiner connue (brevet FR 2.471.074) en forme de rosette à partir d'un fil isolé avec une laque de résine synthétique. Les liaisons entre les bobines bobinées l'une sur l'autre se trouvent alors au centre de la rosette. A travers le bobinage terminé est envoyé un courant assez fort pour que l'isolation en résine synthétique du fil ramollisse et qu'après le refroidissement subséquent du bobinage, les isolations des fils voisins collent entre elles. On obtient ainsi un bobinage rigide auto-portant se présentant sous la forme d'un panier plat, dont la zone périphérique, qui comprend un grand nombre de segments de fils s'étendant selon la périphérie, à savoir les côtés extérieurs superposés des bobines, forme une surépaisseur en forme de bourrelet partiellement replié d'un côté.

La prochaine phase consiste à séparer les groupes de bobines les uns des autres, dont les extrémités se trouvent vers la périphérie de la rosette, par sectionnement des segments de fils reliant encore les groupes des bobines, ce qui donne une rosette comme montré à la figure 4.

Les bornes de connexion 5a, respectivement 5' a décrites précédemment sont disposées en segment d'anneau dans la périphérie de la rosette, écartées les unes des autres de manière à ce qu'elles puissent être isolées électriquement. Pour cela, on dispose dans un moule approprié l'ensemble constitué du bobinage d'induit 4 et des bornes de connexions 5a avec le fer d'induit 6 préalablement enroulées et posées sur la face extérieure des bobines, c'est-à-dire sur la face des bobines en regard du flasque du stator, et on noie le tout dans la matière synthétique 13, comme représenté à la figure 3. La matière plastique 13 est de préférence une résine epoxyde. Le bobinage d'induit est ainsi complètement noyé dans la résine synthétique 13, qui s'étend en outre sur toute la périphérie du fer 6 dans l'exemple considéré; l'espace entre les bornes de connexion 5a est rempli de la même matière synthétique 13 qui isole électriquement ces bornes 5a. De cette manière on obtient un induit préfabriqué compact comprenant les bornes de connexion connectées au bobinage d'induit 4, et l'anneau de fer 6. Il ne reste qu'à fixer cet induit 3 sur la face intérieure d'un flasque de moteur 1 les conducteurs extérieurs e seront connectés aux bornes correspondants 5a à travers l'anneau 2 du stator.

L'induit décrit se distingue, d'une part, par sa fabrication nouvelle et rationnelle et, d'autre part, en ce que les fils des bobines ne sont pas disposés, comme d'ordinaire, dans des rainures des tôles. La fabrication du fer de l'induit et le montage du bobinage d'induit sur le fer sont ainsi sensiblement simplifiés. En outre, on supprime la limitation de la quantité de cuivre, respectivement de l'épaisseur des fils utilisés pour le bobinage d'induit due à la grandeur des rainures des tôles d'induit. Il est possible au besoin de construire des bobinages d'induit avec des quantités de cuivre, respectivement des fils de diamètres très différents et des nombres de tours très différents des bobines et de surmouler sans autre avec une matière synthétique les mêmes fers d'induit préfabriqués avec des segments d'anneaux de connexions correspondant, la pose des fils de bobines dans les rainures des tôles d'induit, qui doivent être adaptées à l'épaisseur des fils étant supprimée. Par la suppression des encoches ce dispositif présente une grande régularité de rotation, même à très faibles vitesses.

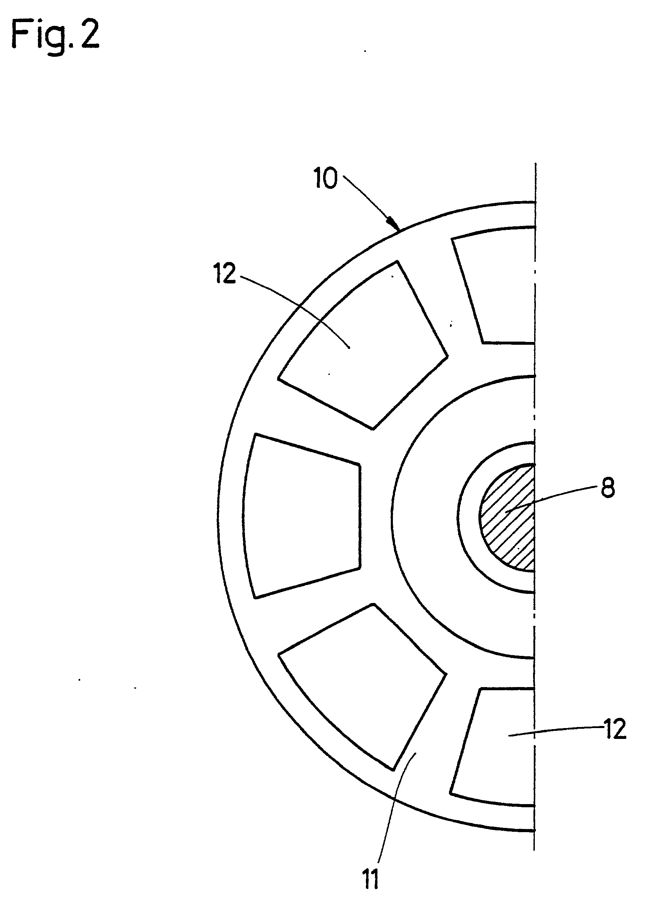

On constate que le moteur représenté aux figures 1 et 2 comprend un rotor en forme de disque de chaque côté duquel se trouve un bobinage statorique fixe, de telle sorte que l'on a en fait deux moteurs côte à côte dont le rotor est commun.

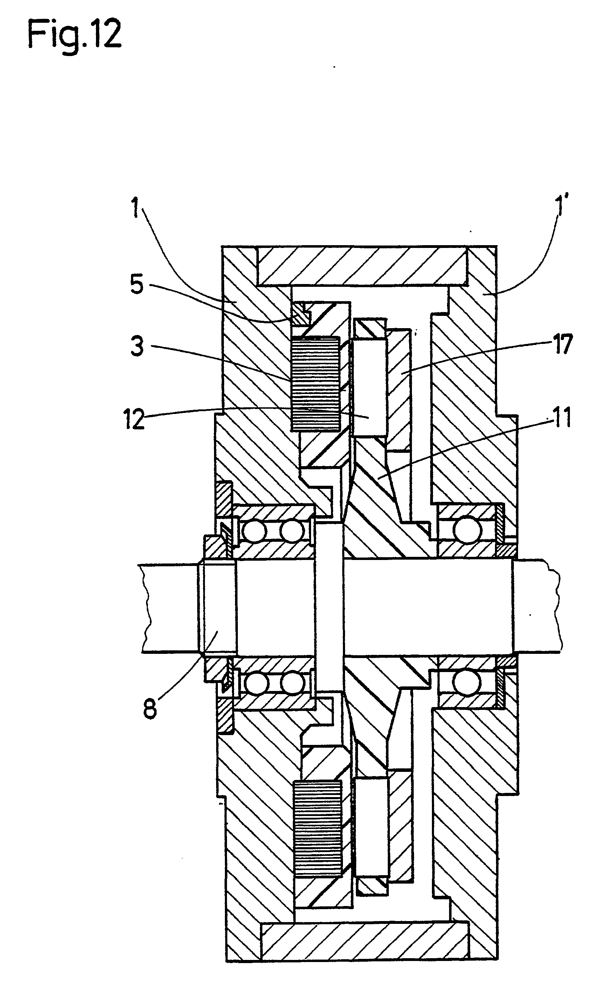

Dans une forme d'exécution simplifiée du moteur, telle que représentée à la figure 12, le moteur présente un seul induit 3 sur le flasque 1, induit qui peut être réalisé exactement comme dans l'exemple selon la figure 1. Le flasque opposé 1' sert uniquement pour fermer le boîtier. Pour la fermeture du circuit magnétique du flux magnétique des aimants permanents 12 du rotor 10 sur la face du rotor opposée à l'induit 3, est fixé, sur cette face du rotor un anneau en fer 17 en contact avec tous les pôles des aimants permanents 12, de telle sorte que les flux magnétiques de ceux-ci peuvent se fermer à travers cet anneau 17. Pour le reste, le rotor peut être construit exactement de la même manière que dans l'exemple selon les figures 1 et 2.

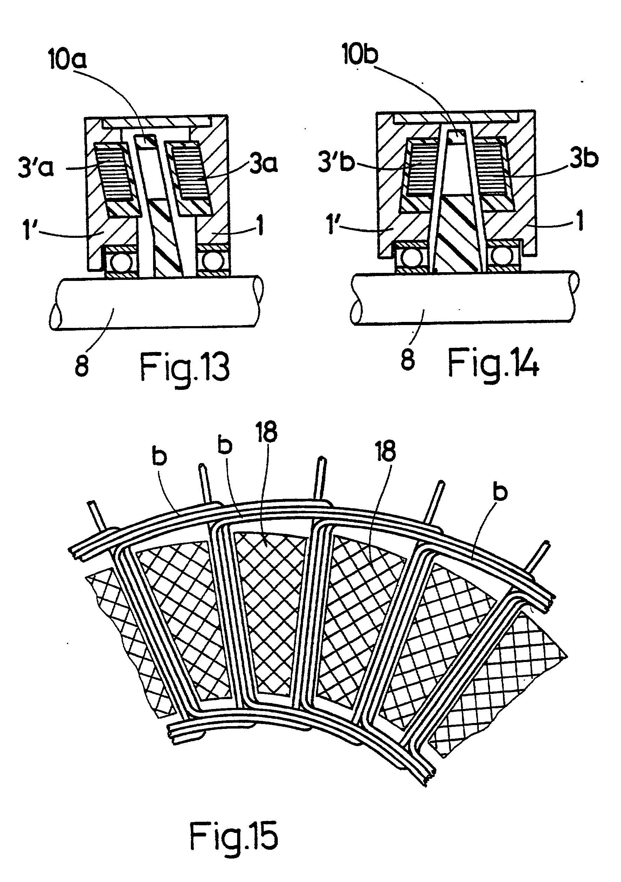

Selon une autre forme d'exécution du moteur, représentée schématiquement à la figure 13, le rotor 10a, peut être légèrement conique, en forme d'assiette, tandis que les deux induits 3a et 3'a situés de chaque côté peuvent avoir une forme adaptée à la forme rotor, c'est-à-dire présenter des conicités conjuguées et opposées.

Dans la forme d'exécution représentée également schématiquement à la figure 14, le rotor 10b est biconique et les deux induits 3b et 3'b disposés de chaque côté sur les flasques de stator 1 et 1' sont par leur conicité adaptés aux deux faces de rotor inclinées relativement à l'axe 8 du moteur.

La conicité du rotor selon la figure 13 ou 14 apporte une plus grande rigidité, avant tout pour éviter un déplacement des aimants permanents fortement sollicités axialement par le fer des stators. En outre, dans le cas de la biconicité selon la figure 14, la masse principale du rotor 10b est plus proche de l'arbre 8, ce qui a pour effet de réduire son moment d'inertie.

Dans une forme d'exécution particulièrement judicieuse d'un induit dans un moteur selon l'invention, les espaces triangulaires, respectivement en forme de segments d'anneaux (fig. 15) entre les côtés dirigés radialement des bobines individuelles b sont remplis par des pièces 18 en forme de coin, respectivement de secteur en matériau ferro-magnétique, avant le surmoulage du bobinage par la matière synthétique. Ces pièces 18 sont, vues en direction de l'axe du moteur, approximativement aussi épaisses que le bobinage d'induit lui-même et renforcent ainsi le champ d'induit, en réduisant l'entrefer d'une valeur correspondant approximativement à l'épaisseur du bobinage. Si d'autre part, on veut maintenir constant le champ d'induit, les aimants permanents peuvent avoir une épaisseur moindre en utilisant les fers d'induit 18 remplissant les espaces vides des bobines, ce qui a pour effet d'abaisser le moment d'inertie du rotor. Les fers d'induit 18 peuvent avantageusement être constitués d'une manière connue en soi d'une poudre de fer spéciale, laquelle, mélangée avec une masse collante, puis formée sous pression de telle sorte que la conductibilité dans la direction radiale est très faible pour empêcher la formation de courant de Foucault.

Des moteurs selon l'invention peuvent être étendus de telle sorte que l'on prévoit sur le même arbre un ou plusieurs rotors en forme de disque, qui le cas échéant peuvent avoir des fonctions différentes. On peut fixer sur l'arbre du rotor au moins un disque qui forme partie d'un codeur rotatif pour la commande du circuit de commutation électronique et/ou constituant une partie d'un frein électro-magnétique. Il est aussi possible que le rotor en plus de sa fonction moteur, puisse être en même temps une partie d'un frein mécanique. Ces différentes fonctions peuvent être également effectuées par des disques spécialisés.

L'invention n'est pas limitée aux formes d'exécution décrites, mais s'étend à toute variante d'exécution en ce qui concerne la forme du moteur et de l'induit et de son bobinage, dans le cadre de l'invention telle que revendiquée. Il est ainsi possible, par exemple, au lieu du bobinage d'induit ondulé décrit dans l'exemple d'exécution précédent, d'utiliser un bobinage d'induit imbriqué comme ceci est également usuel dans les moteurs à courant continu conventionnel. Dans un bobinage imbriqué les bobines se trouvant immédiatement l'une à côté de l'autre sont commutées en série, tandis que dans un bobinage ondulé comme décrit, ce sont les bobines séparées de la valeur d'environ une double division polaire.

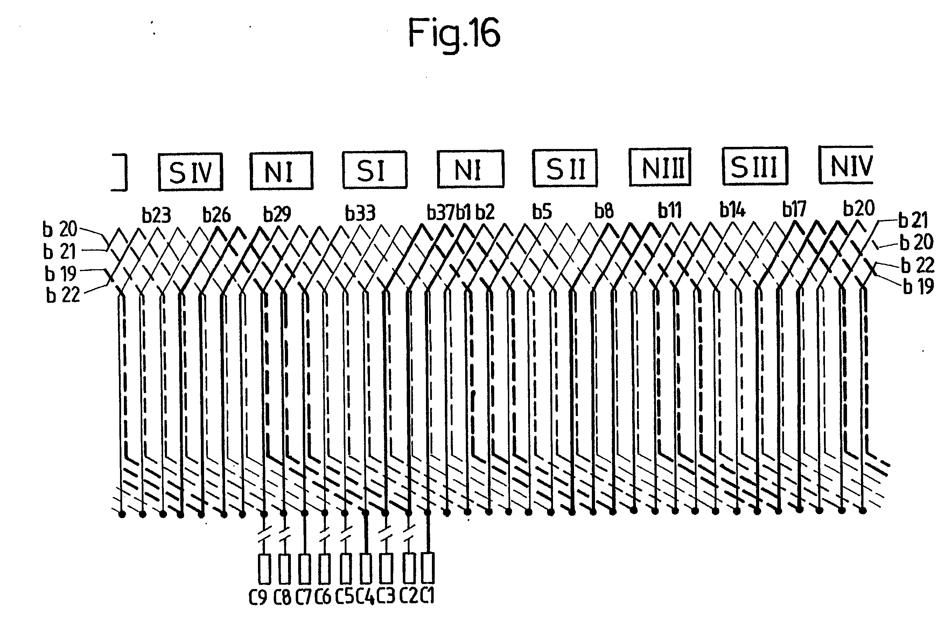

En choisissant lors de la construction de l'induit un nombre M impair de bobines et en plus divisible par le nombre 3 on peut facilement connecter cet induit en triangle ou en étoile, l'alimentation se faisant dans ce cas uniquement par trois bornes de connexion. Le nombre des capteurs sera dans ce cas égal à trois et le nombre de commutations égal à 2p.3. Ainsi on simplifie la construction de ces induits puisqu'ils peuvent être fabriqués sur un seul modèle indépendamment des connexions fixes des bobines. Dans le cas de connexion en étoile ou en triangle, il ne peut s'agir que d'un bobinage ondulé. L'exemple représenté à la figure 16 est identique à celui de la figure 7 sauf que l'on a coupé la connexion du bobinage avec les bornes C2, C3, C5, C6, C8, C9 ainsi une branche est constituée par la mise en série des bobines b1 - b8 - b9 - b10 - b17 - b18 - b19 - b26 - b27 - b28 - b36 - b37, une deuxième branche par des bobines b35 - b5 - b6 - b7 - b14 - b15 - b26 - b23 - b24 - b25 - b33 - b34 et la troisième branche b32 - b2 - b3 - b4 - b11 - b12 - b13 - b20 - b21 - b22 - b29 - b30 - b31.

Les trois branches ainsi formées de ce bobinage sont connectées en triangle et bien sûr la commutation se fait comme décrit précédemment, c'est-à-dire que l'on a six commutations par tour complet du rotor selon la tabelle de la figure 17 concernant les bornes C1, C4, et C7. Dans ce cas on a trois capteurs agissant sur trois commutateurs que l'on a nommé par commodité g"1, g"4, g"7.

## Revendications

1. Moteur à alimentation à courant continu sans collecteur à commutation électronique, à excitation à aimants permanents, pourvu d'un rotor (10) portant p paires d'aimants permanents (12) et d'un stator (1, 1') muni d'au moins un bobinage (4, 4'), l'alimentation des bobines du bobinage étant commandable par un codeur (19, 20) synchronisé au rotor (10) par des moyens mécaniques ou autres, à travers un circuit de commutation électronique (G, G') comprenant un nombre de capteurs disposés le long de la périphérie du codeur détectant la position angulaire du rotor, le nombre de ces capteurs est impair et égal à 2N + 1, N étant un entier positif, le nombre des bornes de connexion du bobinage auxquelles est appliquée de manière sélective la tension d'alimentation est égale à 2N + 1 ou un multiple de celui-ci, le nombre de commutations par tour complet du rotor est égal à 2p(2N +1) et lors de chaque commutation la connexion entre l'une des bornes de la source de tension et l'une au moins des bornes de connexion du bobinage est maintenue, caractérisé par le fait que le circuit de commutation (G, G') est agencé pour opérer en deux modes de commutation, le choix du mode se faisant par une unité de commande (UC) suivant les besoins de la charge, les deux modes sont :
- soit lors de chaque opération de commutation deux commutateurs reliés à deux capteurs agissant sur deux bornes de connexion consécutives (g5, g6) sont actionnés simultanément, l'un déconnectant la borne de connexion branchée à l'autre borne de la source de tension tandis que le second commutateur connecte la borne de connexion consécutive à ladite autre borne de la source de tension,
- soit dans chaque état de commutation trois commutateurs connectent trois des bornes de connexion à la source de tension, deux bornes de connexion consécutives étant connectées à la même borne de la source de tension, et que lors de chaque commutation deux commutateurs agissant sur deux bornes non consécutives sont actionnés, de sorte que alternativement chacune des bornes de la source de tension est connectée à deux bornes de connexion consécutives.

2. Moteur selon la revendication 1, caractérisé par le fait que le choix du mode de commutation est commandé automatiquement en fonction du courant et/ou de la vitesse du moteur.

3. Moteur selon la revendication 1 ou 2, caractérisé par le fait que le bobinage est un bobinage ondulé série.

4. Moteur selon la revendication 1 ou 2, caractérisé par le fait que le bobinage est un bobinage imbriqué.

5. Moteur selon l'une des revendications 1 ou 4, caractérisé par le fait que le nombre de bornes de connexion M est divisible par trois.

6. Moteur selon la revendication 5, caractérisé par le fait que le nombre de bornes de connexion est égal à neuf.

7. Moteur selon la revendication 6, caractérisé par le fait que le bobinage d'induit est connecté en triangle ou en étoile et si M ≧ 9 seulement une borne de connection sur M/3 bornes est connectée au bobinage, les autres bornes étant déconnectées du bobinage, que dans ce cas le nombre de capteurs est égal à 3 et le nombre de commutations égal à 2p.3.

8. Moteur selon l'une des revendications 1 à 7, caractérisé par le fait que les bornes de connexion sont constituées de plaquettes rectangulaires munies d'une encoche et de deux passages parallèles dans le sens de la longueur, l'un étant destiné à être relié au bobinage et l'autre à l'un des commutateurs à travers un fil, et que lesdites bornes sont disposées à la périphérie du bobinage et noyées dans une matière synthétique.

## Claims

1. Direct current motor without commutator, with electronic commutation, with permanent magnet excitation, provided with a rotor (10) carrying p pairs of permanent magnets (12) and a stator (1, 1') provided with at least one winding (4, 4'), the powering of the coils of the winding being able to be controlled by a coder (19, 20) synchronized with the rotor (10) by mechanical or other means, through an electronic commutation circuit (G, G') including a number of sensors arranged along the periphery of the coder detecting the angular position of the rotor, the number of these sensors is odd and equal to 2N + 1, N being a positive integer, the number of connection terminals of the winding to which the supply voltage is selectively applied is equal to 2N + 1 or a multiple of this, the number of commutations per complete revolution of the rotor is equal to 2p(2N + 1), and during each commutation the connection between one of the terminals of the voltage source and at least one of the connection terminals of the winding is maintained, characterized in that the commutation circuit (G, G') is designed to operate in two commutation modes, the choice of mode being made by a control unit (UC) according to the requirements of the load, the two modes are :
- either, during each commutation operation, two switches connected to two sensors acting on two consecutive connection terminals (g5, g6) are simultaneously operated, one disconnecting the connection terminal connected to the other terminal of the voltage source while the second switch connects the consecutive connection terminal to the said other terminal of the voltage source,
- or, in each commutation state, three switches connect three connection terminals to the voltage source, two consecutive connection terminals being connected to the same terminal of the voltage source and, during each commutation, two switches acting on two non-consecutive terminals are operated such that each of the terminals of the voltage source is alternately connected to two consecutive connection terminals.

2. Motor according to claim 1, characterized in that the choice of commutation mode is automatically controlled according to the current and/or the speed of the motor.

3. Motor according to claim 1 or 2, characterized in that the winding is a series wave winding.

4. Motor according to claim 1 or 2, characterized in that the winding is a lap winding.

5. Motor according to one of claims 1 or 4, characterized in that the number of connection terminals M is divisible by three.

6. Motor according to claim 5, characterized in that the number of connection terminals is equal to nine.

7. Motor according to claim 6, characterized in that the armature winding is delta or star connected and if M ≥ 9 only one connection terminal in every M/3 terminals is connected to the winding, the other terminals being disconnected from the winding, and in that in this case the number of sensors is equal to 3 and the number of commutations equal to 2p.3.

8. Motor according to one of claims 1 to 7, characterized in that the connection terminals are formed from rectangular plates provided with a notch and with two parallel passages in the direction of the length, one being intended to be connected to the winding and the other to one of the switches through a wire, and in that the said terminals are placed on the periphery of the winding and embedded in a synthetic material.

**Patentansprüche**

1. Gleichstromgespeister kommutatorloser Motor mit elektronischer Kommutierung und mit Dauermagneterregung, mit einem Läufer (10), der p Paare von Dauermagneten (12) trägt, und mit einem Ständer (1, 1'), der mit wenigstens einer Wicklung (4, 4') ausgerüstet ist, wobei die Speisung der Spulen der Wicklung durch einen mit dem Läufer (10) durch mechanische oder andere Mittel synchronisierten Codierer (19, 20) über eine elektronische Kommutierungsschaltung (G, G') steuerbar ist, welche eine Anzahl von längs des Umfangs des Codierers angeordneten, die Winkelstellung des Läufers erfassenden Messwertgebern aufweist, deren Anzahl ungerade und gleich 2N + 1 ist, wobei N eine positive ganze Zahl ist, und wobei die Anzahl der Anschlussklemmen der Wicklung, auf welche die Speisespannung selektiv gegeben wird, gleich 2N + 1 oder ein vielfaches davon ist und die Anzahl der Kommutierungen je vollständiger Umdrehung des Läufers gleich 2p (2N + 1) beträgt und während jeder Kommutierung die Verbindung zwischen einer der Klemmen der Spannungsquelle und wenigstens einer der Anschlussklemmen der Wicklung beibehalten wird, dadurch gekennzeichnet, dass die Kommutierungsschaltung (G, G') dazu eingerichtet ist, nach zwei Kommutierungsarten zu operieren, wobei die Wahl der Kommutierungsart durch eine Steuereinheit (UC) gemäss den Forderungen der Belastung getroffen wird und die beiden Kommutierungsarten die folgenden sind :

- entweder werden während jeder Kommutierungsoperation zwei Schalter, die mit auf zwei aufeinanderfolgende Anschlussklemmen (g5, g6) wirkenden Messwertgebern verbunden sind, gleichzeitig betätigt, wobei der eine diejenige Anschlussklemme abschaltet, die an die andere Klemme der Spannungsquelle angeschlossen ist, während der andere Schalter die folgende Anschlussklemme an die erwähnte andere Klemme der Spannungsquelle anschliesst, - oder drei Schalter verbinden in jedem Kommutierungszustand drei der Anschlussklemmen mit der Spannungsquelle, wobei zwei aufeinanderfolgende Anschlussklemmen an dieselbe Klemme der Spannungsquelle angeschlossen sind und während jeder Kommutierung zwei Schalter, welche auf zwei nicht aufeinanderfolgende Klemmen wirken, betätigt werden, derart, dass jede der Klemmen der Spannungsquelle abwechselnd an zwei aufeinanderfolgende Anschlussklemmen angeschlossen wird.

2. Motor nach Anspruch 1, dadurch gekennzeichnet, dass die Wahl der Kommutierungsart automatisch als Funktion des Stroms und/oder der Geschwindigkeit des Motors gesteuert wird.

3. Motor nach Anspruch 1 oder 2, dadurch gekennzeichnet, dass die Wicklung eine Serienwellenwicklung ist.

4. Motor nach Anspruch 1 oder 2, dadurch gekennzeichnet, dass die Wicklung eine Schleifenwicklung ist.

5. Motor nach einem der Ansprüche 1 oder 4, dadurch gekennzeichnet, dass die Anzahl der Anschlussklemmen M durch drei teilbar ist.

6. Motor nach Anspruch 5, dadurch gekennzeichnet, dass die Anzahl der Anschlussklemmen gleich neun ist.

7. Motor nach Anspruch 6, dadurch gekennzeichnet, dass die Ankerwicklung im Dreieck oder im Stern geschaltet ist und dass, wenn M ≥ 9 ist, nur eine Anschlussklemme von M/3 Klemmen an die Wicklung angeschlossen ist, während die anderen Klemmen von der Wicklung abgeschaltet sind, und dass in diesem Falle die Anzahl der Messwertgeber gleich 3 und die Anzahl der Kommutierungen gleich 2p.3 ist.

8. Motor nach einem der Ansprüche 1 bis 7, dadurch gekennzeichnet, dass die Anschlussklemmen aus rechteckförmigen Plättchen bestehen, die mit einer Kerbe und zwei parallelen, in Längsrichtung verlaufenden Durchführungen versehen sind, von denen die eine dazu bestimmt ist, an die Wicklung angeschlossen zu werden, und die andere dazu bestimmt ist, über einen Leiter an einen der Schalter angeschlossen zu werden, und dass die erwähnten Klemmen am Umfang der Wicklung angeordnet und in Kunststoffmaterial eingebettet sind.

EP 0 221 594 B1

# Fig. 1

# Fig. 2

# Fig.3

13

4

6

# Fig.3A

5

# Fig.3B

5a

5d    5b    5c

Fig.4

Fig.5

# Fig.6

# Fig.7

EP 0 221 594 B1

## Fig. 8

## Fig.9

| | g1 | g2 | g3 | g4 | g5 | g6 | g7 | g8 | g9 |
|---|---|---|---|---|---|---|---|---|---|
| 1 | + | 0 | 0 | 0 | − | 0 | 0 | 0 | 0 |
| 2 | + | 0 | 0 | 0 | 0 | − | 0 | 0 | 0 |
| 3 | 0 | + | 0 | 0 | 0 | − | 0 | 0 | 0 |
| 4 | 0 | + | 0 | 0 | 0 | 0 | − | 0 | 0 |
| 5 | 0 | 0 | + | 0 | 0 | 0 | − | 0 | 0 |
| 6 | 0 | 0 | + | 0 | 0 | 0 | 0 | − | 0 |
| 7 | 0 | 0 | 0 | + | 0 | 0 | 0 | − | 0 |
| 8 | 0 | 0 | 0 | + | 0 | 0 | 0 | 0 | − |
| 9 | 0 | 0 | 0 | 0 | + | 0 | 0 | 0 | − |
| 10 | − | 0 | 0 | 0 | + | 0 | 0 | 0 | 0 |
| 11 | − | 0 | 0 | 0 | 0 | + | 0 | 0 | 0 |
| 12 | 0 | − | 0 | 0 | 0 | + | 0 | 0 | 0 |
| 13 | 0 | − | 0 | 0 | 0 | 0 | + | 0 | 0 |
| 14 | 0 | 0 | − | 0 | 0 | 0 | + | 0 | 0 |
| 15 | 0 | 0 | − | 0 | 0 | 0 | 0 | + | 0 |
| 16 | 0 | 0 | 0 | − | 0 | 0 | 0 | + | 0 |
| 17 | 0 | 0 | 0 | − | 0 | 0 | 0 | 0 | + |
| 18 | 0 | 0 | 0 | 0 | − | 0 | 0 | 0 | + |

# Fig.10

# Fig.11

|    | g'1 | g'2 | g'3 | g'4 | g'5 | g'6 | g'7 | g'8 | g'9 |
|----|-----|-----|-----|-----|-----|-----|-----|-----|-----|
| 1  | +   | 0   | 0   | 0   | −   | −   | 0   | 0   | 0   |
| 2  | +   | +   | 0   | 0   | 0   | −   | 0   | 0   | 0   |
| 3  | 0   | +   | 0   | 0   | 0   | −   | −   | 0   | 0   |
| 4  | 0   | +   | +   | 0   | 0   | 0   | −   | 0   | 0   |
| 5  | 0   | 0   | +   | 0   | 0   | 0   | −   | −   | 0   |
| 6  | 0   | 0   | +   | +   | 0   | 0   | 0   | −   | 0   |
| 7  | 0   | 0   | 0   | +   | 0   | 0   | 0   | −   | −   |
| 8  | 0   | 0   | 0   | +   | +   | 0   | 0   | 0   | −   |
| 9  | −   | 0   | 0   | 0   | +   | 0   | 0   | 0   | −   |
| 10 | −   | 0   | 0   | 0   | +   | +   | 0   | 0   | 0   |
| 11 | −   | −   | 0   | 0   | 0   | +   | 0   | 0   | 0   |
| 12 | 0   | −   | 0   | 0   | 0   | +   | +   | 0   | 0   |
| 13 | 0   | −   | −   | 0   | 0   | 0   | +   | 0   | 0   |
| 14 | 0   | 0   | −   | 0   | 0   | 0   | +   | +   | 0   |
| 15 | 0   | 0   | −   | −   | 0   | 0   | 0   | +   | 0   |
| 16 | 0   | 0   | 0   | −   | 0   | 0   | 0   | +   | +   |
| 17 | 0   | 0   | 0   | −   | −   | 0   | 0   | 0   | +   |
| 18 | +   | 0   | 0   | 0   | −   | 0   | 0   | 0   | +   |

# Fig.12

EP 0 221 594 B1

10a

3'a

1'

8

Fig.13

10b

3'b

1'

8

Fig.14

b b 18 18 b

Fig.15

Fig.16

## Fig.17

| | g"1 | g"4 | g"7 |
|---|---|---|---|
| 1 | + | − | − |
| 2 | + | + | − |
| 3 | − | + | − |
| 4 | − | + | + |
| 5 | − | − | + |
| 6 | + | − | + |

## Fig.18